# NEUE EUROPÄISCHE PATENTSCHRIFT

(11) **EP 1 678 386 B2**
(45) Veröffentlichungstag und Bekanntmachung des Hinweises auf die Entscheidung über den Einspruch: **18.11.2020**
(45) Hinweis auf die Patenterteilung: 05.12.2012
(21) Anmeldenummer: 04765796.0
(22) Anmeldetag: 04.10.2004
(51) Int. Cl.: E04B 1/76, C03C 13/06

(54) **Dämmstoffelement aus Mineralfaserfilz für den klemmenden Einbau zwischen Balken**
INSULATING MAT OF MINERAL FIBRE WOUND IN A ROLL FOR PRESS FITTING BETWEEN BEAMS
NAPPE DE MATIÈRE ISOLANTE EN FEUTRE DE FIBRES MINÉRALES ENROULÉE SUR UN ROULEAU DESTINÉ À ÊTRE BLOQUÉ ENTRE POUTRES

(30) Priorität: 06.10.2003 EP 03022612; 07.01.2004 FR 0400084
(43) Veröffentlichungstag der Anmeldung: 12.07.2006
(73) Patentinhaber: SAINT-GOBAIN ISOVER, 92400 Courbevoie (FR)
(72) Erfinder: KELLER, Horst, 69259 Wilhelmsfeld (DE); SCHLUMM, Michael, 69198 Schriesheim (DE); BERNARD, Jean-Luc, F-60600 Giencourt Breuil Le Vert (FR)
(74) Vertreter: Bockhorni & Brüntjen Partnerschaft Patentanwälte mbB
(86) Internationale Anmeldenummer: PCT/EP2004/011063
(87) Internationale Veröffentlichungsnummer: WO 2005/035896

(56) Entgegenhaltungen:
- EP-A- 0 399 320
- EP-A- 0 583 791
- EP-A- 1 157 974
- EP-A- 1 182 177
- EP-A1- 0 583 791
- WO-A1-93/02977
- WO-A1-96/30314
- DE-A- 3 612 857
- DE-A- 19 604 238
- GB-A- 2 189 273
- US-B1- 6 284 684

## Beschreibung

Die Erfindung betrifft ein Dämmstoffelement gemäß dem Oberbegriff des Anspruches 1.

Ein derartiger "Klemmfilz" ist beispielsweise aus der DE 36 12 857 bekannt und wird seit vielen Jahren erfolgreich insbesondere für die Dämmung zwischen Dachsparren, im Steildach eingesetzt. Hierzu wird ein Glaswollefilz verwendet, dessen Fasern durch innere Zentrifugierung im Schleuderkorb-Verfahren erhalten werden, die mit einer gegenüber herkömmlicher Glaswolle erhöhten Bindemittelmenge von etwa 6 bis 7 Gew.-% (trocken, bezogen auf die Fasermasse) gebunden sind, wobei Rohdichten bei Nenndicke derart erzeugter Dämmstoffbahnen zwischen 10 und 30 kg/m³ liegen. Für den Transport und die Lagerung wird die erzeugte Filzbahn mit einer Kompression von mittlerweile 1:5 als Rollfilz gewickelt und derart komprimiert in Folie verpackt. An der Baustelle wird dann die Folie aufgeschnitten, worauf sich der Rollfilz aufgrund seiner inneren Spannung entrollt und als ebene Dämmstoffbahn mit Plattencharakter in einer bestimmten Nenndicke vorliegt. Von dieser ausgerollten Dämmstoffbahn können nun, in der Regel unterstützt durch quer zur Längsrichtung der Dämmstoffbahn vorgesehene Markierungslinien, Platten entsprechend der lokalen Breite eines Sparrenfeldes abgeschnitten werden, die dann quer zur Produktions- und Wickelrichtung in das Sparrenfeld eingebaut werden ("Die Platte von der Rolle"). Das Abschneiden erfolgt hierbei mit einem gewissen Übermaß, so dass sich der Plattenabschnitt beim Einsetzen in das Sparrenfeld seitlich an die Sparren andrückt, was noch durch die dadurch entstehenden relativ hohen inneren Spannungen im Klemmfilz in der Form von Klemmkräften unterstützt wird, welche den Plattenabschnitt durch Reibung an der benachbarten Sparrenfläche vor dem Herausfallen sichern. Von diesem klemmenden Einbau kommt der Name "Klemmfilz". Wahlweise zur Dämmstoffbahn sind auch Dämmplatten aus Mineralwolle zum klemmenden Einbau zwischen Sparrenfelder verfügbar, die ebenfalls mit Markierungslinien versehen sind, welche auch hier als Schneidhilfe für ein Einpassen der Dämmstoffplatten zwischen die Sparrenfelder dienen.

Um eine entsprechende Klemmwirkung der von der ausgerollten Dämmstoffbahn abgeschnittenen Dämmstoffplatten zwischen den Dachsparren zu gewährleisten, ist es erforderlich, dass diese auf Übermaß zugeschnittenen Dämmstoffplatten beim Einbau zwischen den Sparren entsprechend hohe Klemmkräfte aulweisen. Hierzu werden diese Klemmfilze auf eine hohe Steifigkeit ausgelegt, welche dadurch erreicht wird, dass diese Glaswollefilze mit einem relativ hohen Bindemittelgehalt hergestellt werden, der zwischen etwa 6 und 7 Gew.-% beträgt. Durch diesen hohen Bindemittelgehalt erfolgt aber andererseits ein entsprechend hoher Eintrag an Brandlast, was wiederum aus brandschutztechnischen Gründen nachteilig ist.

Obwohl derartige Klemmfilze seither in der Praxis millionenfach eingesetzt wurden, wären weitere Verbesserungen wünschenswert: So muss die Rollfilzbahn auch mit einer gewissen Überdicke produziert werden, um sicherzustellen, dass diese nach dem Entrollen tatsächlich wenigstens ihre für den Einbau der Klemmfilzplatten erforderliche Nenndicke erreicht. Dabei ist zu beachten, dass das Öffnen der Rolle nicht unmittelbar nach dem Verpacken erfolgt, sondern nach einer Lagerungszeit beim Hersteller, beim Handel oder beim Verbraucher von Wochen oder Monaten. In dieser Zeit kann die innere Spannung des Materials infolge von alterungsbedingten Materialänderungen allmählich nachlassen, so dass die Dämmstoffbahn für den Klemmfilz beim Entrollen ihre ursprüngliche Dicke nicht wie gewünscht zurückgewinnt, als wenn die Rolle unmittelbar nach der Fertigung wieder geöffnet werden würde. Diese mit der Zeit mögliche verminderte Rückfederung wird durch eine Überdicke bei der Produktion berücksichtigt. Diese Überdicke, die neben Alterungserscheinungen auch ein teilweises Brechen von Fasern beim Wickelvorgang infolge des Kompressionsvorgangs mitberücksichtigt, ist durchaus nicht unwesentlich. So kann ein Klemmfilz mit der Nenndicke von 160 mm eine Produktion in einer Dicke von 200 mm erfordern, um sicherzustellen, dass auch Monate später eine Rückfederung auf die Nenndicke von 160 mm mit Gewissheit erfolgt.

Es sind aber auch Klemmfilze aus Steinwolle bekannt (DE 199 104 167), wobei die Steinwolle durch das sogenannte Düsenblasverfahren oder durch äußere Zentrifugierung, etwa durch das sog. Kaskaden-Schleuderverfahren hergestellt wird. Die damit erzielten herkömmlichen Steinwollefasern bestehen hierbei aus relativ kurzen, jedoch dicken und damit vergleichsweise weniger elastischen Fasern mit einem Perlenanteil von 10 bis 30 % der Fasermasse. Bei Perlen handelt es sich um unzerfasertes Material, also gröbere Faserbestandteile. Die Rohdichten dieses Materials liegen in der Praxis über 25 kg/m³, wobei der Bindemittelgehalt dieser Klemmfilze aus herkömmlicher Steinwolle gegenüber Klemmfilzen aus Glaswolle mit etwa 2 bis 3 Gew.-% relativ gering ist. Jedoch infolge der hohen Rohdichte ist allerdings absolut gesehen der Eintrag an Bindemittel vergleichbar zu dem bei Klemmfilzen aus Glaswolle. Aufgrund der relativ geringen Elastizität werden derartige Klemmfilze aus herkömmlicher Steinwolle, so sie zum Zwecke des Transports zu Rollfilzen gewickelt werden sollen, vor der Wickelstation ggf. wiederholt komprimiert und dekomprimiert, um sie so zu "elastifizieren". Mit einer solchen Elastifizierung durch Druckbeaufschlagung geht aber zwangsläufig Faserbruch einher. Dadurch und durch die nachfolgende weitere Faserbeanspruchung beim Wickeln zur Rolle ist die Rückfederung beim Entrollen zur Bildung der Klemmfilzplatte insbesondere bei hohen Kompressionsgraden nicht befriedigend und ist geringer als bei herkömmlichem Glaswollefilz.

Eine roll- und/oder wickelbare Dämmstoffbahn aus Mineralfaser, vorzugsweise aus Steinwolle, sowie ein Verfahren zur Herstellung eines solchen Dämmstoffelements geht aus der EP 1 182 177 A1 hervor. Der Bindemittelgehalt des Dämmstoffelementes variiert dabei über die Höhe der Fasermasse und ist in Bereichen des Elementes erhöht.

Aufgrund der relativ hohen Rohdichte von herkömmlichem Steinwollefilz ist ein Kompressionsverhältnis von größer etwa 1:2,5 weniger praktikabel, da dann die mechanischen Eigenschaften des Produkts erheblich darunter leiden. Zudem ist mit einem solchen Verdichtungsverhältnis nur entsprechend begrenzter Platzgewinn für Lagerung und Transport erzielbar im Vergleich zu Glaswolleklemmfilzen.

Zur Erzielung der Wärmeleitfähigkeitsgruppe 035 bei Steinwollematerial ist eine Rohdichte von ca. 40 bis 45 kg/m³ erforderlich, während die gleiche Wärmeleitfähigkeitsgruppe bei einem Glaswollematerial bereits bei einer Rohdichte von unter 20 kg/m³ erreicht wird. Zur Erzielung desselben Wärmedurchlasswiderstandes ist somit eine Klemmfilzplatte aus herkömmlichem Steinwollefilz mindestens doppelt so schwer wie eine solche aus herkömmlichem Glaswollefilz, was sich beim Klemmverhalten aufgrund des höheren Eigengewichtes des Steinwollefilzes negativ bemerkbar macht.

Ein charakteristisches Unterscheidungsmerkmal zwischen Glas- und Steinwolle als Untergruppen der Gattung Mineralwolle besteht im Alkali/Erdalkali-Massenverhältnis der Zusammensetzung, welches bei Steinwolle < 1 und bei Glaswolle > 1 ist. Typische herkömmliche Steinwolle hat einen hohen Anteil CaO + MgO von 20 bis 30 Gew.-% und einen relativ niedrigen Anteil von Na₂O und K₂O von etwa 5 Gew.-%. Typische herkömmliche Glaswolle hat hingegen Erdalkalibestandteile von etwa 10 Gew.-% und Alkalibestandteile von über 15 Gew.-%. Diese Zahlen gelten insbesondere für nicht-biopersistente, also biolösliche Zusammensetzungen.

Aufgabe der Erfindung ist es ein Dämmstoffelement, insbesondere eine Mineralfaserplatte von der Rolle zum klemmenden Einbau zwischen Balken, wie Dachsparren, zu schaffen, die gegenüber vergleichbaren Mineralfaserelementen aus dem Stand der Technik zum klemmenden Einbau zwischen Balken eine niedrigere Brandlast aufweist, d. h. geringeren absoluten Bindemittelgehalt, ohne dass die Anforderungen an den vorbeugenden Brandschutz und an das Klemmverhalten sowie die Verarbeitung, insbesondere die Haptik darunter leiden, wobei gleichzeitig die bei der Produktion des aufzurollenden Mineralwollefilzes erforderliche Überdicke absolut gesehen reduziert werden soll.

Diese Aufgabe wird erfindungsgemäß durch die im kennzeichnenden Teil des Anspruches 1 enthaltenen Merkmale gelöst, wobei zweckmäßige Weiterbildungen durch die in den Unteransprüchen enthaltenen Merkmale gekennzeichnet sind.

Die Erfindung zeichnet sich durch ein Alkali/Erdalkali-Massenverhältnis der Mineralfasern von < 1 und eine fein ausgelegte Faserstruktur des Dämmelements aus, die durch die Faktoren mittlerer geometrischer Faserdurchmesser ≤ 4 µm, Rohdichte im Bereich von 8 bis 25 kg/m³ sowie einen Bindemittelanteil im Bereich von 4 % bis 5,5 Gew.%, bezogen auf die Fasermasse des Dämmstoffelements bestimmt ist. Aufgrund des gewählten Alkali/Erdalkali-Massenverhältnisses von < 1 weisen die Fasern eine hohe Temperaturbeständigkeit ähnlich herkömmlicher Steinwollefasern auf. Die feine Faserstruktur ist im wesentlichen dadurch bedingt, dass Fasern mit einem mittleren geometrischen Faserdurchmesser ≤ 4 µm verwendet werden. Eine solche Faserstruktur lässt sich mit Glaswolle zwar auch erreichen, die jedoch im Vergleich zu Steinwolle wesentlich weniger temperaturbeständig ist. Der Bereich des mittleren geometrischen Durchmessers von herkömmlichen Steinwollefasern liegt üblicherweise größer 4 bis 12 µm, so dass die Fasern relativ grob ausgebildet sind. Infolge der erfindungsgemäßen Auslegung ergibt sich für ein Mineralfasergebilde bei gleicher Rohdichte wie herkömmliche Steinwolle eine weit größere Anzahl von Fasern innerhalb des Gebildes und damit eine erhöhte Anzahl von Kreuzungspunkten der Fasern. Deswegen kann diese Struktur auf geringere Rohdichte eingestellt werden, wobei der Rohdichtebereich erfindungsgemäß im Bereich von 8 bis 25 kg/m³ für den angestrebten Einsatz des Klemmfilzes beträgt. Gleichwohl zeichnet sich das Dämmelement durch ein gutes Dämmvermögen aus.

Ferner kann aber auch der Eintrag eines vorzugsweise organischen Bindemittels bei dem erfindungsgemäßen Produkt gegenüber Glaswolle abgesenkt werden, nämlich auf einen Bereich von 4 Gew.-% bis 5,5 Gew.-%, vorzugsweise auf einen Bereich von 4,5 Gew.-% bis 5 Gew.-%, wodurch die eingetragene Brandlast reduziert wird, ohne dass dadurch das Klemmverhalten negativ beeinflusst wird. Schließlich ist infolge der fein ausgelegten Faserstruktur und der geringeren Brandlast das Dämmstoffelement ausreichend steif. Im Falle einer Dämmstoffbahn ist diese aber gleichwohl faserschonend zu einer Rolle aufwickelbar. Die aus der Rolle durch Abtrennen vereinzelte Mineralfaserplatte ist dabei dennoch genügend steif für den klemmtechnischen Einsatz zwischen Balken bzw. Sparren. Infolge der fein ausgelegten Faserstruktur gegenüber herkömmlicher Steinwolle erhöht sich der für die Dämmwirkung wesentliche Luftanteil innerhalb des Klemmfilzes, was zu einer entsprechenden Erhöhung des Dämmeffektes führt. Sowohl die Dänmstoffbahn wie auch die Dämmstoffplatte sind in dem für die Klemmwirkung maßgeblichen Bereich homogen ausgebildet, d.h. sie weisen über den Querschnitt gleiche Dichteverhältnisse auf.

Im Vergleich zu herkömmlicher Steinwolle resultiert aus dem höheren relativen Bindemittelgehalt eine steifere Auslegung des Klemmfilzes, wobei jedoch wegen der erheblich grö-βeren Rohdichte der herkömmlichen Steinwolle insgesamt die eingetragene absolute Brandlast wesentlich reduziert wird. Analog reduziert sich auch die Brandlast im Vergleich zu herkömmlichen Klemmfilzen aus Glaswolle.

Wie bereits eingangs dargelegt, zeichnen sich die erfindungsgemäßen Fasern infolge des Alkali/Erdalkali-Masseverhältnis < 1 durch hohe Temperaturbeständigkeit aus und entsprechen dadurch den Eigenschaften herkömmlicher Steinwolle. Aufgrund der jedoch feineren Faserstruktur und vergleichsweise geringeren Rohdichte ergibt sich für das erfindungsgemäße Gebilde ein weit elastischeres Verhalten. Gegenüber herkömmlicher Steinwolle braucht die Dämmstoffbahn somit vor dem Wickelvorgang nicht speziell behandelt, etwa gewalkt zu werden, so dass das bei herkömmlicher Steinwolle erforderliche Komprimieren und Dekomprimierten zur Elastifizierung des Gebildes nicht erforderlich ist. Zweckmäßigerweise wird der Mineralwollefilz während dem Wickeln zu einer Rolle in einem Verdichtungsverhältnis von 1:3 bis 1:8, vorzugsweise von 1:4 bis 1:6 komprimiert. Gleichwohl zeichnet sich der erfindungsgemäße Klemmfilz durch ein hervorragendes Rückfederungsverhalten aus, so dass das erfindungsgemäße Dämmstoffelement vorteilhaft mit einer vergleichsweise geringeren Überdicke produziert werden kann, als es bei herkömmlichen Produkten der Fall ist. Dieses Rückfederungsverhalten bleibt aber auch nach längeren Lagerzeiten eines gewickelten Rollfilzes erhalten, so dass die Dämmstoffbahn bei Gebrauch wieder vorteilhaft auf ihre Nenndicke zurückfedert, was auch für die dämmtechnischen Eigenschaften wesentlich ist. Der Begriff Dämmstoffbahn ist hierbei weit zu verstehen und umfasst sowohl eine Endlosbahn, so wie sie aus dem Aushärteofen zur mechanischen Weiterverarbeitung gelangt, d.h. Randbesäumung, Zuschnitt, etc., also auch zu einer Rolle konfektionierte, d.h. gewickelte Dämmstoffbahnen, die vor Ort abstandsgerecht zu Platten vereinzelbar sind.

Die Reduzierung der erforderlichen Überdicke aufgrund des verbesserten Rückfederungsverhaltens wirkt sich bei einer vorhandenen, unveränderten Produktionsanlage dahingehend vorteilhaft aus, dass mit dieser auch bisher nicht herstellbare Nenndicken jetzt ohne zusätzliche Investitionskosten hergestellt werden können, da sich die maximale Gesamtdicke des produzierten Filzes aus Nenndicke und Überdicke zusammensetzt.

Weiterhin kann in vorteilhafter Weise aufgrund der Reduzierung der erforderlichen Überdicke die Betriebssicherheit der Produktion erhöht werden. Der begrenzende Parameter ist eine anlagentechnisch durch den Aushärteofen vorgegebene minimale Rohdichte, welche sich durch die beginnende Ausbildung von Inhomogenitäten im Vlies durch die Durchströmung mit Heißluft beim Aushärtevorgang definiert ist. Wegen der geringeren erforderlichen Überdicke bei gleicher eingebrachter Fasermasse liegt diese in einen kleineren Volumen vor, woraus sich eine höhere Rohdichte im Aushärteofen ergibt, d.h. die Reduzierung der Überdicke erhöht den "Sicherheitsabstand". Dies ermöglicht es unter Ausnutzung des so gewonnenen "Sicherheitsabstandes", dass die Produktrohdichte weiter minimiert werden kann, was wiederum zu einem leichteren Produkt führt, welches emnüdungsfreier verarbeitet (Stichwort: kürzere Verlegezeiten) und transportiert werden kann.

Hinzu kommt, dass im Vergleich zu herkömmlicher Steinwolle beim Einbau weitere Vorteile für das erfindungsgemäße Produkt vorliegen. So ergibt sich beim Einbau zwischen den Dachsparren eine verbesserte Rückfederung in "seitlicher" Richtung deshalb, weil die meisten Fasern parallel zu den Großflächen des Produkts ausgerichtet sind, und überdies in dieser Richtung, welche beim Wickelvorgang radial zum Wickelkern liegt, praktisch keine Fasern durch den Wickelvorgang selbst nachteilig in Mitleidenschaft gezogen werden. Der Klemmfilz ist also in dieser seitlichen Richtung ganz erheblich steifer als etwa in seiner "dicken" Richtung. Es hat sich nun gezeigt, dass diese seitliche Klemmkraft beim Einbau im Falle des erfindungsgemäßen Produktes mit der Zeit nicht merklich nachlässt, was offensichtlich auf die verbesserten Elastizitätseigenschaften des erfindungsgemäßen Produkts auch unter Alterungseinflüssen zurückzuführen ist.

Für praxisgerechte Ausführungsformen wird vorteilhaft mit einer Rohdichte im Bereich von 8 bis 14 kg/m³, vorzugsweise 11 bis 14 kg/m³ insbesondere etwa 13 kg/m³ gearbeitet, wobei mit solchen Rohdichten eine Wärmeleitfähigkeit entsprechend der Wärmeleitfähigkeitsgruppe 040 gemäß DIN 18165 oder dergl. erzielt wird. Bei Einstellung auf eine Wärmeleitfähigkeit entsprechend der Wärmeleitfähigkeitsgruppe 035 gemäß DIN 18165 oder dergl., ist eine Rohdichte von 18 bis 25 kg/m³, vorzugsweise von 19 bis 24 kg/m³, insbesondere von etwa 23 kg/m³ erforderlich. Zur Verdeutlichung ist festzuhalten, dass Verweise auf DIN-Nonnen und Prüfvorschriften sich jeweils auf die zum Anmeldetag aktuelle Fassung beziehen.

Mit dem erfindungsgemäßen Klemmfilz ist es auch möglich, Brandschutzkonstruktionen mindestens einer Feuerwiderstandsklasse EI 30 gemäß EN 13501 zu erreichen, bei denen der Klemmfilz zwischen Balken wie Dachsparren ohne eine zusätzliche Innenraumverkleidung angeordnet ist.

Die Mineralfasern für die erfindungsgemäße Dämmstoffbahn lassen sich insbesondere durch eine innere Zentrifügierung im Schleuderkorb-Verfahren mit einer Temperatur am Schleuderkorb von mindestens 1.100 °C herstellen, wodurch Fasern mit feinem Faserdurchmesser im angegebenen Bereich erzielt werden. Mit innerer Zentrifugierung im Schleuderkorb-Verfahren hergestellte Mineralwollefasern sind aus der EP 0 551 476, der EP 0 583 792, der WO 94/04468 sowie der US 6,284,684 bekannt, auf die wegen weiter Einzelheiten insoweit ausdrücklich Bezug genommen wird.

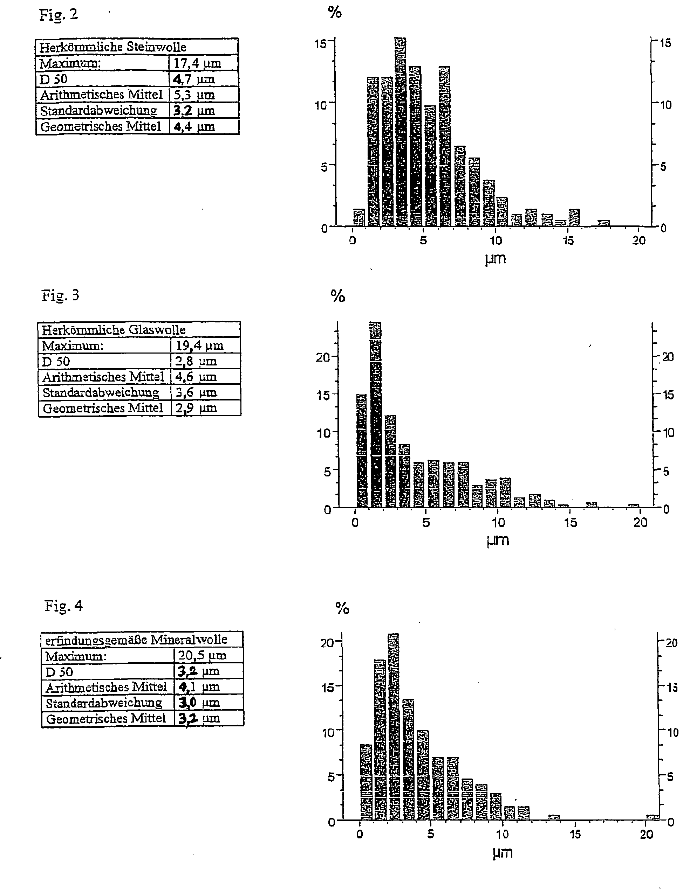

Der für die Faserfeinheit verantwortliche geringe mittlere geometrischen Durchmesser bestimmt sich aus der Häufigkeitsverteilung des Durchmessers der Fasern. Die Häufigkeitsverteilung lässt sich anhand einer Wolleprobe unter dem Mikroskop ermitteln. Es wird der Durchmesser einer großen Anzahl von Fasern ausgemessen und aufgetragen, wobei sich eine linksschiefe Verteilung ergibt (vgl. Fig. 2, 3 und 4).

Mit Blickpunkt auf die Temperaturbeständigkeit ist es dabei zweckmäßig, dass das Dämmelement einen Schmelzpunkt nach DIN 4102, Teil 17 von ≥1.000 °C aufweist.

Die Klemmfilze sind aus in einem physiologischen Milieu löslichen Mineralfasern gebildet, wobei diese gemäß den Anforderungen der europäischen Richtlinie 97/69/EG und/oder den Anforderungen der deutschen Gefahrstoffverordnung Abs. IV Nr. 22 entsprechen, wodurch eine gesundheitliche Unbedenklichkeit der Klemmfilze bei Herstellung, Verarbeitung, Nutzung und Entsorgung gewährleistet ist.

Nachfolgend ist in einer Tabelle 1 die bevorzugte Zusammensetzung der Mineralfasern eines erfindungsgemäßen Klemmfilzes bereichsweise in Gew.-% angegeben.

**Tabelle 1**

| | | | | | |
|---|---|---|---|---|---|
| SiO₂ | 39-55 | % | vorzugsweise | 39-52 | % |
| Al₂O₃ | 16-27 | % | vorzugsweise | 16-26 | % |
| CaO | 6-20 | % | vorzugsweise | 8-18 | % |
| MgO | 1-5 | % | vorzugsweise | 1-4,9 | % |
| Na₂O | 0-15 | % | vorzugsweise | 2-12 | % |
| K₂O | 0-15 | % | vorzugsweise | 2-12 | % |
| R₂O (Na₂O + K₂O) | 10-14,7 | % | vorzugsweise | 10-13,5 | % |
| P₂O₅ | 0 - 3 | % | insbesondere | 0-2 | % |
| Fe₂O₃ (Eisen gesamt) | 1,5-15 | % | insbesondere | 3,2-8 8 | % |
| B₂O₃ | 0-2 | % | vorzugsweise | 0 - 1 | % |
| TiO₂ | 0-2 | % | vorzugsweise | 0,4-1 1 | % |
| Sonstiges | 0-2,0 | % | | | |

Ein bevorzugter engerer Bereich von SiO₂ beträgt 39-44 %, insbesondere 40-43 %. Ein bevorzugter engerer Bereich für CaO beträgt 9,5 bis 20 %, insbesondere 10 bis 18 %.

Die erfindungsgemäße Zusammensetzung zeichnet sich insbesondere durch die Kombination aus, dass ein hoher Al₂O₃ Gehalt zwischen 16 und 27 %, vorzugsweise größer als 17 % und/oder vorzugsweise geringer als 25 % bei einer Summe der netzwerkbildenden Elemente SiO₂ und Al₂O₃ von zwischen 57 und 75 % beträgt, vorzugsweise größer als 60 % und/oder vorzugsweise geringer als 72 %, mit einem Anteil der Summe aus Na₂O und K₂O, der relativ hoch ist, jedoch in einem Bereich von 10-14,7 %, vorzugsweise 10-13,5 % liegt, bei einem Magnesiumoxidanteil in einem Anteil von wenigsten 1 %.

Diese Zusammensetzungen zeichnen sich durch ein beträchtlich verbessertes Verhalten bei sehr hohen Temperaturen aus.

In Bezug auf Al₂O₃ beträgt ein engerer bevorzugter Bereich 17 bis 25,5 %, insbesondere 20 bis 25 % und zwar vorzugsweise 21 bis 24,5 %, insbesondere etwa 22-23 oder 24 Gew.-%.

Gute feuerfeste Eigenschaften werden insbesondere bei Einstellung des Magnesiumoxidgehalts auf mindestens 1,5 %, insbesondere 2 % und zwar vorzugsweise 2 bis 5 % und dabei besonders bevorzugt ≥2,5 % oder 3 %. Ein hoher Magnesiumoxidanteil wirkt sich positiv gegen ein Absenken der Viskosität aus und wirkt sich deswegen günstig gegen ein Sintern des Materials aus.

Insbesondere ist bevorzugt, dass dann, wenn der Anteil von Al₂O₃ ≥22 % beträgt, der Anteil an Magnesiumoxid vorzugsweise wenigstens 1 %, insbesondere bevorzugt 1 bis 4 % beträgt, wobei ein weiterer bevorzugter Bereich von Magnesiumoxid 1 bis 2 % und zwar insbesondere 1,2 bis 1,6 % beträgt. Der Anteil an Aluminiumoxid ist vorzugsweise auf 25 % begrenzt, um eine ausreichend geringe Liquidustemperatur zu erhalten. Liegt der Aluminiumoxidanteil in einem Bereich von etwa 17 bis 22 %, beträgt der Anteil an Magnesiumoxid vorzugsweise wenigstens 2 %, insbesondere etwa 2 bis 5 %.

Die Erfindung kombiniert somit die Vorteile von Glaswolle hinsichtlich Dämmvermögen und Kompression mit denen von Steinwolle hinsichtlich Temperaturbeständigkeit und zeichnet sich auch durch einen ausgezeichneten vorbeugenden Brandschutz aus. Gegenüber Steinwolle kommt aber auch noch eine wesentliche Gewichtseinsparung zum Tragen, was sich indirekt wiederum auf den klemmtechnischen Einbau auswirkt, da die erfindungsgemä-βen Klemmfilze praktisch frei von nicht an der Dämmwirkung teilhabenden Perlen sind, das heißt der Anteil an Perlen < 1 % ist. Dadurch ist die klemmtechnisch aufzufangende Eigenlast des Klemmfilzes geringer. Zusätzlich verbessert sich die Haptik des Produktes aufgrund der feineren Faserstruktur und dem Fehlen von Perlen, wobei es sich bei den Perlen um nicht zerfaserte Bestandteile handelt, welche neben der gröberen Faser für die Haptik von herkömmlicher Steinwolle maßgeblich verantwortlich sind und zu einem höheren Verstaubungsverhalten beitragen können. Schließlich kann aufgrund des elastischen Verhaltens der erfindungsgemäßen Dämmstoffbahn der Mineralwollefilz mit einer vergleichsweise geringeren Überdicke produziert werden.

Nachfolgend wird die Erfindung anhand der Zeichnung näher beschrieben und erläutert. Darin zeigen
- Fig. 1: in perspektivischer Darstellung eine Rolle aus Mineralfasern mit ausgerolltem Endabschnitt,
- Fig. 2: ein typisches Faserhistogramm einer herkömmlichen Steinwolle,
- Fig. 3: ein typisches Faserhistogramm einer herkömmlichen Glaswolle, und
- Fig. 4: ein typisches Faserhistogramm der erfindungsgemäßen Mineralwolle.

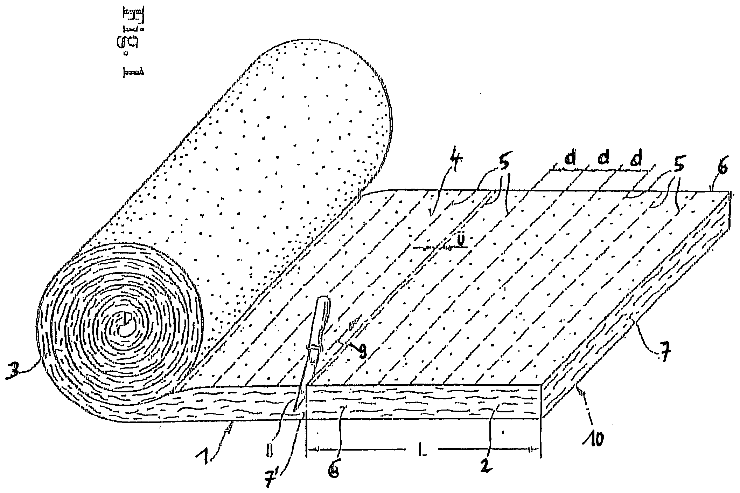

Die in Fig. 1 dargestellte Dämmstoffbahn 1 aus Mineralfasern ist zum Teil entrollt, wobei der entrollte vordere Endabschnitt mit 2 bezeichnet ist. Im dargestellten Ausführungsbeispiel weist die Dämmstoffbahn eine Rohdichte von 13 kg/m³ auf. Der mittlere geometrische Faserdurchmesser beträgt 3,2 µm und der Bindemittelanteil liegt bei 4,5 Gew.-% bezogen auf die Fasermasse der Dämmstoffbahn. Die dargestellte Dämmstoffbahn ist unkaschiert und aus Mineralfasern gebildet, bei denen das Alkali/Erdalkali-Massenverhältnis < 1 beträgt. Alternativ ist auch eine kaschierte Ausführung entsprechend der EP 1 223 031 möglich, auf die ausdrücklich Bezug genommen wird.

Wie dem teilweise vom Wickel 3 der Rolle ausgerollten vorderen Endabschnitt 2 entnommen werden kann, ist die im Wickel innenliegenden Oberfläche 4 der Dämmstoffbahn mit modularen Markierungslinien 5 versehen, die quer zur Längsrichtung der Dämmstoffbahn angeordnet und in gleichmäßigem Abstand d zueinander auf der Oberfläche der Dämmstoffbahn angeordnet sind. Diese Markierungslinien, die in unterschiedlicher Art und Weise auf der Dämmstoffbahn angeordnet sein können, sind durch optisch wirksame Linien gebildet, welche farblich von der Dämmstoffbahn abgesetzt und insbesondere durch beheizte Markierungswalzen erzeugt sind. Diese Markierungslinien 5 dienen als Schneidhilfe, so dass in einfacher Weise ein Durchschneiden der Dämmstoffbahn auf eine vorbestimmte Länge L des Endabschnitts möglich ist, wobei der Schnitt senkrecht zu den seitlichen Rändern 6 und parallel zum vorderen Rand 7 der Dämmstoffbahn 1 geführt wird, wie durch ein Messer 8 in Fig.1 angedeutet ist. Das Messer wird hierbei in Pfeilrichtung 9 durch das Material geführt, so dass ein mit einem Übermaß Ü von z.B. 2 cm bemessener Endabschnitt erzeugt wird, der als Mineralfaserplatte für den klemmtechnischen Einbau zwischen Sparren geeignet ist. Alternativ kann auch die Markierung in Form von Piktogrammen und dergl. ausgeführt werden, sofern diese als Schneidhilfe dienen können.

Im dargestellten Ausführungsbeispiel ist die Dämmstoffbahn 1 unter einer Kompression von 1:4,5 zur Rolle gewickelt. Mit der Rohdichte von 13 kg/m³ entspricht die Wärmeleitfähigkeit der Dämmstoffbahn der Wärmeleitfähigkeitsgruppe 040.

Die Zusammensetzung in Gew.-% der konventionellen, also aus herkömmlicher Steinwolle gebildeten Dämmstoffbahnen, sowie aus herkömmlicher Glaswolle gebildeten Dämmstoffbahnen und der erfindungsgemäßen Dämmstoffbahnen ergibt sich aus Tabelle 2, wobei die herkömmliche Steinwolle sowie die erfindungsgemäßen Dämnnnstoffbahnen einen Schmelzpunkt von mindestens 1000°C nach DIN 4102 Teil 17 aufweisen.

**Tabelle 2**

| Material | herkömmliche Steinwolle | herkömmliche Glaswolle | erfindungsgemäße Dämmstoffbahn |
|---|---|---|---|
| SiO₂ | 57,2 | 65 | 41,2 |
| Al₂O₃ | 1,7 | 1,7 | 23,7 |
| Fe₂O₃ | 4,1 | 0,4 | 5,6 |
| TiO₂ | 0,3 | | 0,7 |
| CaO | 22,8 | 7,8 | 14,4 |
| MgO | 8,5 | 2,6 | 1,5 |
| Na₂O | 4,6 | 16,4 | 5,4 |
| K₂O | 0,8 | 0,6 | 5,2 |
| B₂O₃ | | 5 | |
| P₂O₅ | - | 0,15 | 0,75 |
| MnO | | 0,3 | 0,6 |
| SrO | | | 0,5 |
| BaO | | | 0,34 |
| Total | 100 | 99,95 | 99,89 |

Die Zusammensetzung zeichnet sich auch dadurch aus, dass die Fasern biolöslich sind, d. h. in einem physiologischen Milieu abgebaut werden können. Die Dämmstoffbahn mit dieser Zusammensetzung zeichnet sich durch hohe Rückstellkräfte und entsprechende Steifigkeit aus. Bei vergleichbarem Übermaß wie im Stand der Technik werden hierbei ausreichend hohe Rückstellkräfte beim Einbau zwischen Sparren unter Kompression erzielt, die auch nach längeren Einsatzzeiten einen sicheren Halt der Dämmstoffplatte zwischen Sparren gewährleisten.

Schließlich zeigen die Fig. 2 und 3 für die in der Beschreibung erwähnte herkömmliche Steinwolle und herkömmliche Glaswolle jeweils ein typisches Faserhistogramm einer Dämmstoffbahn, wobei Fig. 4 ein solches der Fasern einer erfindungsgemäßen Dämmstoffbahn angibt.

Aus der nachfolgenden Tabelle 3 ergeben sich bevorzugte Ausführungsbeispiele der erfindungsgemäßen Fasern (sogenannte IM-Wolle) im Vergleich zu herkömmlichen Glas- und Steinwollefasern bezogen auf die erzielte Klemmwirkung. Hierbei steht GV für den Glühverlust (und damit den Bindemittelanteil) und WLG für die Wärmeleitgruppe nach DIN 18165. Die Messung erfolgte hierbei durch eine interne Prüfnorm zur Ermittlung der Klemmfähigkeit. Hierbei wurden Ausfühnmgsbeispiele mit Nenndichten von 140 und 160 mm gegenübergesetzt. Das für die Messung verwendete Gerät verfügt über einen feststehenden und verstellbaren Sparrenteil, der in Abständen vom 700 mm, beginnend in 100 mm Schritten, bis 1300 mm verstellt und arretiert werden kann. Die Prüflinge werden jeweils mit einem Übermaß von 10 mm auf den Klemmsitz geprüft. Das Messgerät wurde auf eine Klemmbreite von 1200 mm eingestellt und der Prüfling mit 1210 mm Breite zwischen die Sparren eingeklemmt. Klemmt der Filz nicht, wird die nächst kleinere Breite am Gerät eingestellt und der Prüfling auf 1110 mm zugeschnitten. Die Prüfung wurde hierbei jeweils solange fortgesetzt, bis der Prüfling im Gerät klemmt, woraus sich die in Tabelle 3 angegebenen Werte für die Klemmwirkung ergeben.

**Tabelle 3:**

| | Rohrdichte [kg/m³] | Nenndicke | GV[%] | WLG | Klemmwirkung |
|---|---|---|---|---|---|
| Glaswolle | 13 | 140 | 4 | 040 | 800 |
| Steinwolle | 31 | 140 | 3 | 040 | 800 |
| IM | 14 | 140 | 4 | 040 | 1200 |
| Glaswolle | 21 | 160 | 4 | 035 | 700 |
| Steinwolle | 46 | 160 | 3 | 035 | 800 |
| IM | 23 | 160 | 4 | 035 | 1200 |

## Patentansprüche

1. Dämmstoffelement aus mit einem Bindemittel gebundenen, in einem physiologischen Milieu löslichen Mineralfasern in Form einer zu einer Rolle aufgewickelten und in Dämmstoffplatten vereinzelbaren Dämmstoffbahn, wobei die Dämmstoffplatten rückfedernd für den klemmenden Einbau zwischen Balken, wie Dachsparren gebildet sind, **dadurch gekennzeichnet, dass** die Zusammensetzung der Mineralfasern des Dämmstoffelements ein Alkali/Erdalkali Massenverhältnis von < 1 aufweist, und dass deren Faserstruktur bestimmt ist durch einen mittleren geometrischen Faserdurchmesser ≤ 4 µm, eine Rohdichte im Bereich von 8 bis 25 kg/m³ und einen Anteil des Bindemittels bezogen auf die Fasermasse des Dämmstoffelements im Bereich von 4 % bis 5,5 Gew.-%.

2. Dämmstoffelement nach Anspruch 1, **dadurch gekennzeichnet, dass** das Bindemittel ein organisches Bindemittel ist.

3. Dämmstoffelement nach Anspruch 1 oder 2, **dadurch gekennzeichnet, dass** der Anteil des Bindemittels bezogen auf die Fasermasse des Dämmstoffelements im Bereich von 4,5 bis 5 Gew.-% liegt.

4. Dämmstoffelement nach einem der vorhergehenden Ansprüche, **dadurch gekennzeichnet, dass** dessen Rohdichte im Bereich von 8 bis 14 kg/m³, vorzugsweise 11 bis 14 kg/m³, insbesondere etwa 13 kg/m³, liegt, wobei das Dämmstoffelement eine Wärmeleitfähigkeit entsprechend der Wärmeleitfähigkeitsgruppe 040 gemäß DIN 18165 oder dergl. aufweist.

5. Dämmstoffelement nach einem der vorhergehenden Ansprüche, **dadurch gekennzeichnet, dass** deren Rohdichte im Bereich von 18 bis 25 kg/m³, vorzugsweise von 19 bis 24 kg/m³, insbesondere von etwa 23 kg/m³, liegt, wobei das Dämmstoffelement eine Wärmeleitfähigkeit entsprechend der Wärmeleitfähigkeitsgruppe 035 gemäß DIN 18165 oder dergl. aufweist.

6. Dämmstoffelement, eingebaut zwischen Balken wie Dachsparren ohne zusätzliche Innenraumbekleidung, nach einem der vorhergehenden Ansprüche, **dadurch gekennzeichnet, dass** dieses eine Feuerwiderstandsklasse von mindestens EI 30 gemäß EN 13501 aufweist.

7. Dämmstoffelement nach einem der vorhergehenden Ansprüche, **dadurch gekennzeichnet, dass** der Wickelvorgang des zu einer Rolle aufgewickelten Mineralfaserfilzes vorbehandlungsfrei, wie etwa walkfrei durchgeführt ist.

8. Dämmstoffelement nach Anspruch 7, **dadurch gekennzeichnet, dass** die aufgewickelte Rolle des Mineralfaserfilzes in einem Verdichtungsverhältnis von 1:3 bis 1:8, vorzugsweise von 1:4 bis 1:6 komprimiert ist.

9. Dämmstoffelement nach einem der vorhergehenden Ansprüche, **dadurch gekennzeichnet, dass** auf dieser Markierungen als Schneidhilfe angeordnet sind.

10. Dämmstoffelement nach einem der vorhergehenden Ansprüche, **dadurch gekennzeichnet, dass** die Mineralfasern des Dämmstoffelements hinsichtlich ihrer Löslichkeit in einem physiologischen Milieu den Anforderungen der europäischen Richtlinie 97/69/EG und/oder den Anforderungen der deutschen Gefahrstoffverordnung Abs. IV Nr. 22 entsprechen.

11. Dämmstoffelement nach einem der vorhergehenden Ansprüche, **dadurch gekennzeichnet, dass** die Mineralfasern des Dämmelements durch eine innere Zentrifugierung im Schleuderkorbverfahren mit einer Temperatur am Schleuderkorb von mindestens 1.100 °C hergestellt sind.

12. Dämmstoffelement nach einem der vorhergehenden Ansprüche, **dadurch gekennzeichnet, dass** diese einen Schmelzpunkt nach DIN 4102, Teil 17 von ≥ 1.000°C aufweist.

13. Dämmstoffelement nach einem der vorhergehenden Ansprüche, **gekennzeichnet durch** folgende Bereiche der chemischen Zusammensetzung der Mineralfasern in Gew.-%:
| | | | | | |
|---|---|---|---|---|---|
| SiO₂ | 39 - 55 | % | vorzugsweise | 39 - 52 | % |
| Al₂O₃ | 16 - 27 | % | vorzugsweise | 16 - 26 | % |
| CaO | 9,5 - 20 | % | vorzugsweise | 10 - 18 | % |
| MgO | 1 - 5 | % | vorzugsweise | 1 - 4,9 | % |
| Na₂O | 0 - 15 | % | vorzugsweise | 2 - 12 | % |
| K₂O | 0 - 15 | % | vorzugsweise | 2 - 12 | % |
| R₂O (Na₂O + K₂O) | 10 - 14,7 | % | vorzugsweise | 10 - 13,5 | % |
| P₂O₅ | 0 - 3 | % | insbesondere | 0 - 2 | % |
| Fe₂O₃ (Eisen gesamt) | 1,5 - 15 | % | insbesondere | 3,2 - 8 | % |
| B₂O₃ | 0 - 2 | % | vorzugsweise | 0 - 1 | % |
| TiO₂ | 0 - 2 | % | vorzugsweise | 0,4 - 1 | % |
| Sonstiges | 0 - 2,0 | % | | | |

14. System für den klemmenden Einbau von Dämmstoffelementen zwischen Balken eines Gebäudes, insbesondere Dachsparren, **gekennzeichnet durch** Dämmstoffelemente mit den Merkmalen eines oder mehrerer der vorhergehenden Ansprüche, die mit Klemmsitz zwischen benachbarten Balken anordbar und gehalten sind.

## Claims

1. An insulation element of mineral fibers, bound with a binding agent and soluble in a physiological milieu, in the form of an insulation sheet rolled up as a roll and separable into insulation plates, whereby the insulation plates are formed resilient for clamped assembly between beams, such as roof rafters, **characterized in that** the composition of the mineral fibers of said insulation element has an alkali/earth alkali mass ratio of < 1 and that their fiber structure is determined by an average geometric fiber diameter of ≤ 4 µm, a gross density in the range of 8 to 25 kg/m³ and a portion of the binding agent in relation to the fiber mass of the insulation element in the range of 4 % to 5.5 weight %.

2. The insulation element according to claim 1, **characterized in that** the binding agent is an organic binding agent.

3. The insulation element according to claim 1 or 2, **characterized in that** the portion of the binding agent, referred to the fiber mass of the insulation element, is in the range of 4.5 to 5 weight-%.

4. The insulation element according to one of the preceding claims, **characterized in that** its gross density is in the range of 8 to 14 kg/m³, preferably 11 to 14 kg/m³, in particular of about 13 kg/m³, the insulation element having a thermal conductivity in accordance with the thermal conductivity group 040 according to DIN 18165 or the like.

5. The insulation element according to one of the preceding claims, **characterized in that** its gross density is in the range of 18 to 25 kg/m³, preferably 19 to 24 kg/m³, in particular in the range of about 23 kg/m³, the insulation element having a thermal conductivity in accordance with the thermal conductivity group 035 according to DIN 18165 or the like.

6. The insulation element assembled between beams such as roof rafters without any additional internal lining, according to one of the preceding claims, **characterized in that** it has a fire resistance category of at least EI 30 according to EN 13501.

7. The insulation element according to one of the preceding claims, **characterized in that** the roll up process of the mineral fiber felt, rolled up to a roll, is carried out in the absence of any prior treatment, e.g. without a fulling process.

8. The insulation element according to claim 7, **characterized in that** the rolled up roll of the mineral fiber felt is compressed in a compression ratio of 1:3 to 1:8, preferably 1:4 to 1:6.

9. The insulation element according to one of the preceding claims, **characterized in that** markings are provided as cutting aids on it.

10. The insulation element according to one of the preceding claims, **characterized in that** the mineral fibers of the insulation element correspond to the requirements of the European guideline 97/69/EG and/or to the requirements of section IV, no. 22 of the German Ordinance on Hazardous Substances as far as their solubility in a physiological milieu is concerned.

11. The insulation element according to one of the preceding claims, **characterized in that** said mineral fibers of the insulation element are produced by an internal centrifugation in a centrifugation basket process using a temperature at the centrifugation basket of at least 1,100 ° C.

12. The insulation element according to one of the preceding claims, **characterized in that** said element has a fusion point of ≥ 1,100 ° C according to DIN 4102, part 17.

13. The insulation element according to one of the preceding claims, **characterized by** the following ranges of chemical composition of mineral fibers in weight %:
| | | | |
|---|---|---|---|
| SiO₂ | 39 - 55 % | preferably | 39 - 52 % |
| Al₂O₃ | 16 - 27% | preferably | 16 - 26 % |
| CaO | 9.5 - 20 % | preferably | 10 - 18 % |
| MgO | 1 - 5 % | preferably | 1 - 4.9 % |
| Na₂O | 0 - 15 % | preferably | 2 - 12 % |
| K₂O | 0 - 15 % | preferably | 2 - 12 % |
| R₂O (Na₂O + K₂O) | 10 - 14.7 % | preferably | 10 - 13.5 % |
| P₂O₅ | 0 - 3 % | in particular | 0 - 2 % |
| Fe₂O₃ (iron total) | 1.5 - 15 % | in particular | 3.2 - 8 % |
| B₂O₃ | 0 - 2 % | preferably | 0 - 1 % |
| TiO₂ | 0 - 2 % | preferably | 0.4 - 1 % |
| Other | 0 - 2.0 % | | |

14. A system for the clamping installation of insulation elements between beams of a building, in particular roof rafters, **characterized by** insulation elements with the features of one or more of the preceding claims being aligned and held with a clamping seat between adjacent beams.

## Revendications

1. Elément en matière isolante composé de fibres minérales liées avec un liant et solubles dans un milieu physiologique, sous forme d'un panneau en matière isolante enroulé en rouleau et pouvant être séparé en plaques en matière isolante, les plaques en matière isolante étant formées avec retour élastique pour une installation par coinçage entre des poutres, **caractérisé en ce que** la composition des fibres minérales de l'élément en matière isolante présente un rapport massique alcali/base alcalinoterreuse < 1, et **en ce que** leur structure fibreuse est définie par un diamètre de fibre géométrique moyen ≤ 4 µm, une masse volumique apparente dans la plage de 8 à 25 kg/m³ et une proportion du liant rapportée à la masse fibreuse de l'élément en matière isolante dans la plage de 4 % à 5,5 % en poids.

2. Elément en matière isolante selon la revendication 1, **caractérisé en ce que** le liant est un liant organique.

3. Elément en matière isolante selon la revendication 1 ou la revendication 2, **caractérisé en ce que** la proportion du liant rapportée à la masse fibreuse de l'élément en matière isolante est dans la plage de 4,5 % à 5 % en poids.

4. Elément en matière isolante selon une des revendications précédentes, **caractérisé en ce que** sa masse volumique apparente est dans la plage de 8 à 14 kg/m³, de préférence de 11 à 14 kg/m³, en particulier environ 13 kg/m³, l'élément en matière isolante présentant une conductibilité thermique conformément au groupe de conductibilité thermique 040 selon DIN 18165.

5. Elément en matière isolante selon une des revendications précédentes, **caractérisé en ce que** sa masse volumique apparente est dans la plage de 18 à 25 kg/m³, de préférence de 19 à 24 kg/m³, en particulier d'environ 23 kg/m³, l'élément en matière isolante présentant une conductibilité thermique conformément au groupe de conductibilité thermique 035 selon DIN 18165 ou similaire.

6. Elément en matière isolante, installé entre des poutres telles que des chevrons de ferme sans habillage intérieur supplémentaire, selon une des revendications précédentes, **caractérisé en ce que** celui-ci présente une classe de résistance au feu d'au moins EI 30 selon DIN 13501.

7. Elément en matière isolante selon une des revendications précédentes, **caractérisé en ce que** le processus d'enroulement du feutre de fibres minérales enroulé en un rouleau est effectué sans traitement préliminaire, sans foulage par exemple.

8. Elément en matière isolante selon la revendication 7, **caractérisé en ce que** le rouleau enroulé du feutre de fibres minérales est comprimé dans un rapport de compression de 1:3 à 1:8 de préférence de 1:4 à 1:6.

9. Elément en matière isolante selon une des revendications précédentes, **caractérisé en ce que** des marquages sont disposés sur l'élément pour aider la découpe.

10. Elément en matière isolante selon une des revendications précédentes, **caractérisé en ce que** les fibres minérales de l'élément en matière isolante correspondent, en ce qui concerne leur solubilité dans un milieu physiologique, aux exigences de la directive européenne 97/69/UE et/ou aux exigences de l'ordonnance allemande sur les matières dangereuses, paragraphe IV n° 22.

11. Elément en matière isolante selon une des revendications précédentes, **caractérisé en ce que** les fibres minérales de l'élément en matière isolante sont fabriquées par une centrifugation intérieure dans le procédé du panier centrifuge avec une température sur le panier centrifuge d'au moins 1 100 °C.

12. Elément en matière isolante selon une des revendications précédentes, **caractérisé en ce que** celui-ci présente un point de fusion selon DIN 4102, Partie 17, ≥ 1 000 °C.

13. Elément en matière isolante selon une des revendications précédentes, **caractérisé par** les plages suivantes de composition chimique des fibres minérales en % en poids :
| | | | |
|---|---|---|---|
| SiO₂ | 39 - 55 % | de préférence | 39 - 52 % |
| Al₂O₃ | 16 - 27 % | de préférence | 16 - 26 % |
| CaO | 9,5 - 20 % | de préférence | 10 - 18 % |
| MgO | 1 - 5 % | de préférence | 1 - 4,9 % |
| Na₂O | 0 - 15 % | de préférence | 2 - 12 % |
| K₂O | 0 - 15 % | de préférence | 2 - 12 % |
| R₂O (Na₂O + K₂O) | 10 - 14,7 % | de préférence | 10 - 13,5 % |
| P₂O₅ | 0 - 3 % | de préférence | 0 - 2 % |
| Fe₂O₃ (fer total) | 1,5 - 15 % | de préférence | 3,2 - 8 % |
| B₂O₃ | 0 - 2 % | de préférence | 0 - 1 % |
| TiO₂ | 0 - 2 % | de préférence | 0,4 - 1 % |
| Autres | 0 - 2,0 % | | |

14. Système pour l'installation par coinçage d'éléments en matière isolante entre des poutres d'un bâtiment, en particulier des chevrons de ferme, **caractérisé par** des éléments en matière isolante qui ont les caractéristiques d'une ou de plusieurs revendications précédentes et qui peuvent être disposes avec une assise par coinçage entre des poutres voisines et qui y sont retenus.
